# EUROPEAN PATENT SPECIFICATION

(11) **EP 1 808 065 B1**
(45) Date of publication and mention of the grant of the patent: **25.06.2008**
(21) Application number: 06425014.5
(22) Date of filing: 13.01.2006
(51) Int. Cl.: A01F 15/07

(54) **Bale wrapping device and method for agricultural machines**
Ballenumhüllungvorrichtung und -verfahren für landwirtschaftliche Arbeitsmaschinen
Appareil et méthode d'enrubannage de balles pour machines agricoles

(43) Date of publication of application: 18.07.2007
(73) Proprietor: Gallignani S.p.A., 48026 Russi RA (IT)
(72) Inventor: Ravaglia, Paolo, 48012 Bagnacavallo (IT)
(74) Representative: Leone, Mario

(56) References cited:
- EP-A- 1 264 533
- DE-A1- 3 301 420
- US-A- 5 568 716
- US-A- 5 687 548

## Description

The present invention refers to a bale wrapping device for agricultural machines and to the related method (see e.g. DE-A-3 301 420).

In the field of agricultural machines there is a category of machinery, generally referred to as round balers, allowing to pick crop material, like, e.g. forage, and to compact it in the form of a cylindrical bale.

In such machinery, the crop material is inletted into a forming chamber where, by means of cylindrical rollers and belts, the material is set in rotation and compacted until obtaining cylindrical bales of desired dimensions or density. Upon producing the bale, prior to ejection from the forming chamber, the former is usually wrapped, typically by means of a net or other material in the form of sheets.

For this purpose, round balers are usually equipped with a wrapping device. Such devices feed net or other wrapping material, supplied by a reel that generally is arranged in a position side-by-side to the harvesting chamber, and means for transferring the wrapping material from the reel toward the bale forming chamber.

Said transferring means have the task of bringing the net near to the bale forming chamber.

The remaining step of wrapping, in particular the winding up of the net around the bale, takes place automatically, since the commonly utilized nets exploit a peculiar weaving allowing them to cling to the bale and be automatically dragged therewith.

After the bale has completed some revolutions, and therefore is entirely wound up, the wrapping is completed and the net can be cut so as to allow the ejection of the bale thus prepared.

Hence, the most critical step, for the carrying out of which there are a plurality of different embodiments, is evidently that in which the net is inserted into the forming chamber.

In fact, the devices carrying out this function should not interfere in the bale forming step; otherwise, the net might cling to the bale during its forming and, in addition, the picked material that is frequently outletted from the forming chamber might hinder the normal operation of the wrapping device.

Moreover, it has to be understood that such devices should also be of simple and cost-effective implementation, as they should not draw on the production costs of the machine.

A further critical aspect concerns the positioning of the wrapping device, which may be placed in different locations on the round baler, in particular depending on the type of machine utilized.

Moreover, in several machines the wrapping device is positioned so as to exploit the action of gravity and deliver the net inside the chamber by descent.

The inserting of the net, among various arrangements utilized, can take place in the front portion of the machine, more precisely between two elements contributing to the holding or the tumbling of the bale, like, e.g., a roller and a crossbar, or two rollers.

In particular, it is preferable to locate the wrapping device in a manner such as to carry out the inletting of the net in the front portion, as in this case the operation is more reliable, beside being more easily controllable by the operator aboard the machine. Hence, in general it is preferable with difficult produce like, e.g., green grass.

However, in these cases the wrapping devices exhibit implementation difficulties, above all in variable chamber round balers.

In such machines the bale forming chamber has variable volume, by means of a system generally consisting of rollers and belts that, around a starting core, diametrally increases the bale up to a size requested by the customer.

With a variable chamber the utilization of traditional wrapping systems proves more difficult, since in order to wrap a small-diameter bale with a frontally located wrapping device it will be necessary to place the device at the bottom, without possibly exploiting a top-to-bottom falling of the net by effect of gravity.

Therefore, in these cases it is utilized a system for bringing the net from a housing position to one of insertion into the forming chamber, where the bale can capture said net in order to drag it.

In known systems the net, at the wrapping, is pulled by two rollers, usually one of metal and another one rubber-covered, and then dragged toward the bale with various systems.

E.g., there may be exploited the pull of the main belts onto which the net is pressed. However, such a system entails remarkable limitations in the positioning of the wrapping device, which may only be at the port.

Therefore, in order to utilize the wrapping device at a front position, there are used an apron toward the chamber inlet or, alternatively, a roller, often entailing problems of excessive dimensions and whose operation is anyhow invalidated, as explained in the foregoing, by the outletting of material from the chamber.

Incidentally, to prevent the outletting of material from the chamber additional bulkheads are used as well, acting during the bale forming step.

Alternatively, EP 432 830, to New Holland, describes a retractable system gripping the net to bring it near to the inlet chamber, concomitantly uncoiling it from a reel. Then, the same holding member lets the net run over, as it is wound up by means of the rotation of the bale.

However, such a system proves particularly complex since the cutting means has to cut the net in order to have the latter always remain inserted into the holding member. Accordingly, the knife has to work between the bale and the holding member itself, with the usual problems of dimensions and outletting of material.

Moreover, also the use of such a holding member in lieu of the common feed rollers proves remarkably more complex, utilizing a complicated kinematic motion.

Lastly, this wrapping system requires lengthy times during the replacing of the net reel, as the inserting of the latter into the holding member is quite difficult.

Generally, moreover, a disadvantage shared by all of said wrapping devices is that the means for transferring the wrapping material consist of rollers or articulated mechanisms. Suchlike transferring means exhibit however limitations with regard to their effectiveness in transferring the wrapping material, as well as to their relative dimensions.

Hence, the technical problem underlying the present invention is to provide a bale wrapping system overcoming the drawbacks mentioned above with reference to the known art.

Such a problem is solved by a bale wrapping device for agricultural machines according to claim 1 and by the wrapping method according to claim 10.

The present invention provides several relevant advantages. The main advantage lies in effectively carrying out the wrapping, still optionally locating the wrapping device anywhere on the machine, in particular frontally, even in case of round balers with variable volume chamber, said wrapping being in no way affected by any outletting of material nor requiring the use of additional bulkheads.

Moreover, the device according to the present invention is of simple and cost-effective implementation, also having reduced dimensions.

Moreover, a further advantage concerns the step of replacing the net reel, which may take place over short times and without requiring complex operations.

Other advantages, features and the operation modes of the present invention will be made apparent by the following detailed description of some embodiments thereof, given by way of example and without limitative purposes. Reference will be made to the figures of the annexed drawings, wherein:
figure 1 is a side view showing a round baler comprising the bale wrapping device according to the present invention;
figure 2 is a side view illustrating the wrapping device and supporting means thereof, details of figure 1, arranged according to different operative configurations;
figure 3 is a partial perspective view, illustrating the supporting means of figure 1 and means for feeding the bale wrapping device; and
figures 4A to 4F are side views schematically illustrating the operation of the bale wrapping device.

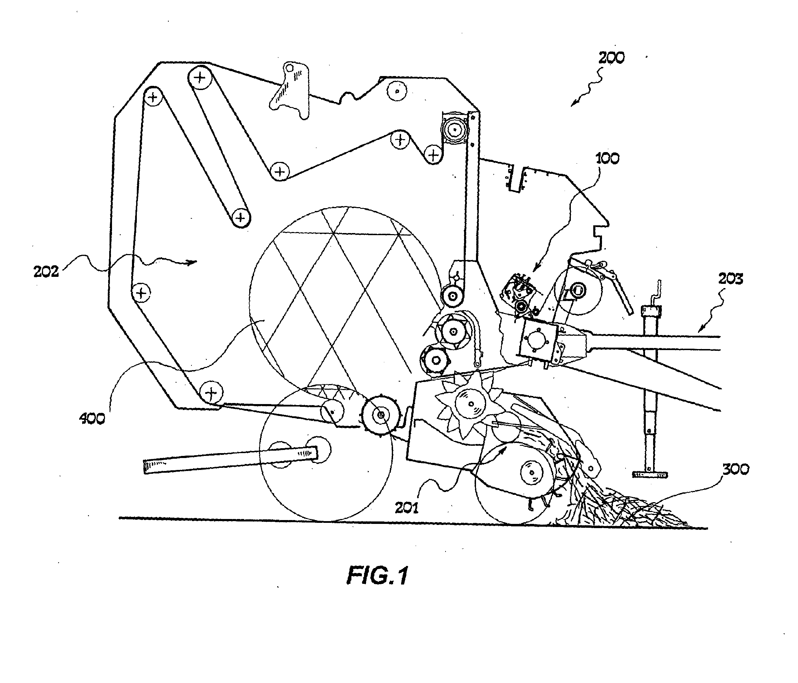

Initially referring to figure 1, an agricultural machine 200 for forming a bale 400, in particular a round baler, comprises a pickup 201 for lifting crop material 300, such as hay, straw, forage or other green or dry produce, from the ground to bring it into a forming chamber 202.

The round baler 200 is connected, at a front portion thereof, to a tractor or other means, not illustrated in the figure, by means of a hook and a suitable drive train 203.

The round baler further comprises a device 100 for wrapping the bale, preferably located in front of the forming chamber, basically at said front portion.

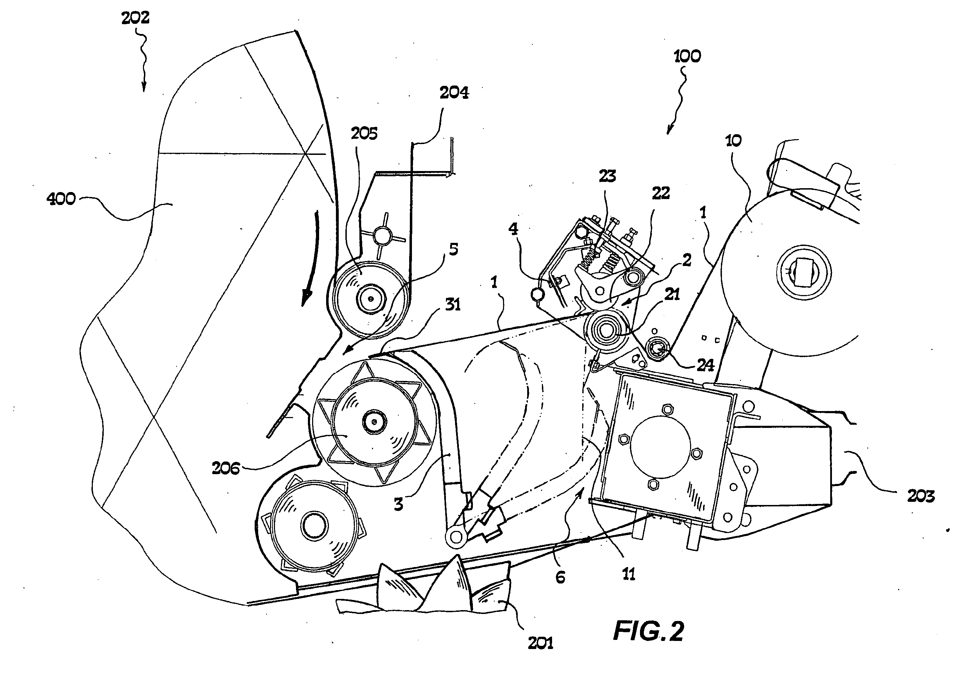

The wrapping device 100, illustrated in detail in figure 2, allows to insert a sheet material 1, in the present embodiment in the form of a net, into the forming chamber 202 for forming the bale 400, to wind it up around the latter and then perform the cutting of the material 1.

According to a preferred embodiment, the sheet material 1 is coiled on a reel 10 which may be gradually uncoiled to supply a desired length of material.

In order to uncoil the reel 10, the wrapping device comprises feeding means 2, implemented by a pair of rolls 21 and 22, between which the net 1 is positioned.

The option of using simply implemented feeding means, like said rolls, is particularly advantageous since those prove very reliable, cost-effective and of simple implementation.

Moreover, as it will be detailed hereinafter, the feeding means does not have to be located near to the forming chamber, thereby reducing the problems related to the outletting of crop material.

In addition, the feeding means comprises a spreader roller 24, arranged in an intermediate position between the reel and the rolls.

Always referring to figure 2, a first drive roll 21 is made of rubber and, connected to an electric clutch or an electric motor, provides traction to the net 1.

The second compression roll 22 is pressed against the former roll by means of suitable compression means 23, and is instead made of metallic material.

The action of said compression means 23 keeps the net blocked between the rolls 21 and 22, in a manner such that the rotation of the drive roll 21 may cause the uncoiling of the reel 10 and the advancing of the net 1.

The drive roll 21 is connected to an electric clutch allowing to relieve the traction and make the roll idle during suitable wrapping steps.

Thus, the feeding means 2 may let the net 1 advance freely when the latter is dragged otherwise.

In order to carry out the wrapping of the bale 400, the net 1 is inserted into the forming chamber 202 through an inlet 5 that, according to the present embodiment, is obtained between a roller 205 onto which there run belts 204 for forming the bale 400, and a tumbling roller 206.

Evidently, in case of different configurations of the agricultural machine the inlet 5 may be located in other positions, optionally facilitating the insertion of the net into the chamber.

As it is known, during the forming of the bale a certain quantity of crop material may be outletted from the inlet 5; as it can be seen in figure 2, the feeding means are located at a distance from the inlet 5 allowing to prevent said material from depositing in excess on said means.

Said outletting of material is basically unavoidable, as, whatever the system used, a sufficiently wide space should be provided for the transit of the net and of the related means for inletting into the forming chamber.

However, in variable chamber machines like the one shown in figure 1, by locating the feeding means at such a distance from the inlet it is not possible to use the sole gravity to bring the net 1 from the feeding means to the inlet 5.

In fact, in this type of machines also the wrapping device is located in a position sufficiently low to allow even the wrapping of small-sized bales.

For this purpose, the device according to the present invention comprises means 3 for supporting the net 1, allowing to support the latter while it advances toward the inlet 5 and toward the forming chamber.

In other words, the supporting means 3 can supportingly receive the net 1 in a manner such that the latter, while being uncoiled from the reel 10, or anyhow supplied by the feeding means, approaches the inlet 5.

To carry out this action, the supporting means is movable from a receiving position 6, far from the inlet 5 of the chamber 202, to a position near thereto, as illustrated in figure 2.

Moreover, the feeding means 2 is such as to supply the net 1 at a region intermediate between said two positions.

Thus, the feeding means can supply a portion 11 of net interfering with the motion of the supporting means.

Hence, as it will be detailed hereinafter by disclosing the operation method of the present device, if the portion 11 of net is supplied when the supporting means is in the receiving position 6, the latter means, during its motion toward the inlet 5, will come into contact with the portion 11 of net.

Thus, the supporting means 3 can urge and supportingly receive the net 1 and bring it near to the inlet 5.

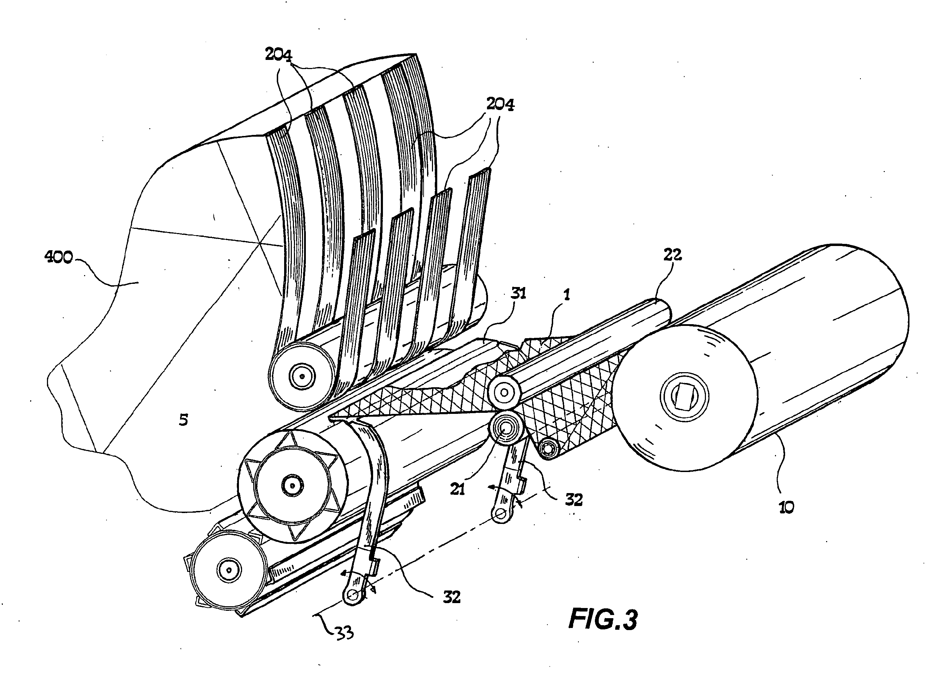

According to a preferred embodiment, the supporting means is implemented with bars 32, pivotally connected to the frame of the agricultural machine, between which a supporting plate 31 is arranged, as illustrated in figure 3.

Moreover, the supporting plate can have a serration at one end thereof, so as to allow the net to get caught in correspondence of a set of teeth, not illustrated in the figure.

The bars 32 can pivot about an axis of rotation 33 so as to move the plate from the receiving position 6 to that near to the inlet 5.

The pivoting of the bars is carried out by means of the releasing of an elastic element, in particular a spring, not illustrated in the figure, which is prewound by an electric motor.

In particular, the electric motor allows to bring the bars 32 from the inlet to the receiving position 6. Moreover, such a motion concomitantly allows to wind up the spring.

Hence, by unblocking the bars and therefore releasing the spring, the supporting means can return, urged by the action of the elastic element, into the position near to the inlet.

The use of the spring, or generally of the elastic element, proves particularly advantageous since the motion of the supporting means occurs with greater freedom and fluidity.

Hence, during the motion between said positions the plate carries out an action of tensioning and/or supporting the sheet material 1, during the approaching to the inlet 5. Hence, upon reaching a position sufficiently near to the inlet, the plate carries out the sole supporting of the material, thereby allowing the sliding of the latter onto the plate, toward the forming chamber.

The motion of the plate 31, along with the entailed shifting of the portion 11 of net, is disclosed in figure 2.

The operation of the wrapping device according to the present invention is based on the combined action of the feeding means 2 and of the supporting means 3.

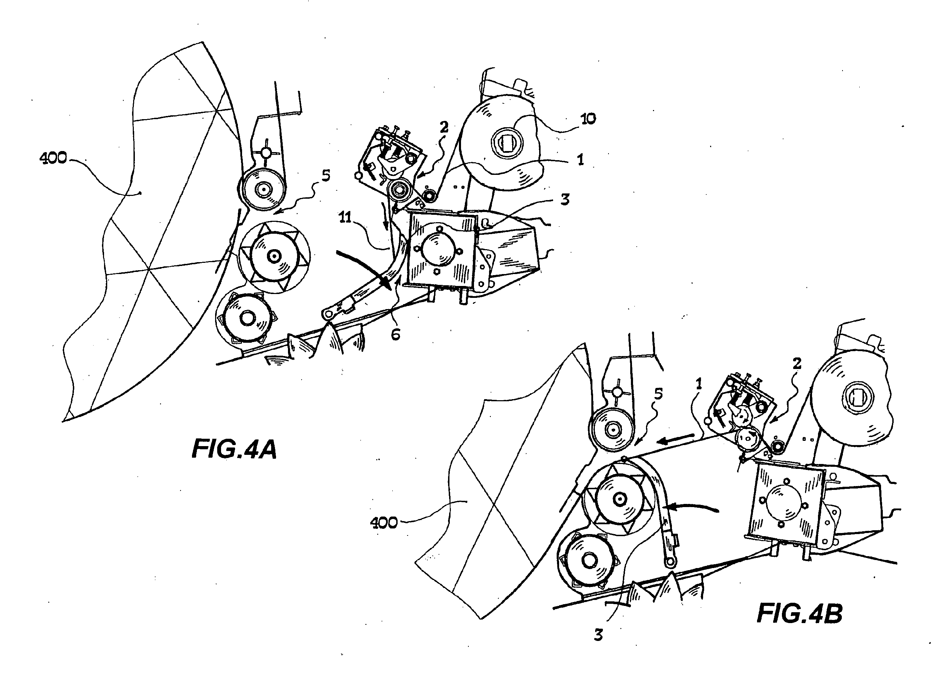

Referring to figure 4A, the wrapping of the bale is carried out according to a method initially envisaging a step in which the supporting means is shifted from the position near to the inlet 5 to the receiving position 6.

During said step, the motion of the supporting means is not hindered by the net 1, as the latter is held sufficiently near to the feeding means 2.

Upon having brought the supporting means in the receiving position 6, the net is supplied by the feeding means 2. In particular, the latter uncoil a length of net such as to supply at least a portion that may interfere with the motion of the supporting means 3 from the receiving position 6 to that near to the inlet 5.

This feature is possible since, as described in the foregoing, the feeding means 2 is such as to supply the net 1 in a region intermediate between said positions.

Therefore, referring to figure 4B, the supporting means is then shifted toward the position near to the inlet 5, so as to bring the portion of net near to the latter.

This motion, which is described also in figure 2, occurs by means of the action of tensioning and/or supporting onto the portion 11 of net that the supporting means, and in particular the plate 31, exert during their pivoting.

However, the motion of the supporting means is not capable of tensioning the net, merely of keeping it there. There are teeth holding the net.

In fact, referring to figure 2, initially the plate 31 urges the net 1 toward the inlet 5; then, upon reaching a position near thereto, said plate supports the net resting thereon as the latter enters the forming chamber 202 and is wound up around the bale 400.

As mentioned in the foregoing, in the present embodiment the net 1 is advanced by means of the rolls 21 and 22, that therefore at the approaching of the inlet gradually supply the net, until it reaches the forming chamber and the bale so as to be dragged by the motion of rotation of the latter.

To attain the approaching of the net to the inlet 5, the feeding means cooperate with the supporting means, in a manner such that the latter appear at the inlet 5 with the net resting on the plate 31.

For this purpose, the plate has a shape such as to stop the net during the rotation toward the inlet, in particular, as mentioned above, by means of the serration. Accordingly, after the arm 32, urged by the spring, has traveled a certain angular sector, the net is tensioned by the plate 31.

The spring does not have a force sufficing to uncoil additional net and therefore drag the latter toward the inlet; therefore, the travel of the supporting means is interrupted.

In order to carry on the approaching toward the inlet 5, the drive roll 21 supplies additional net, until arriving, with subsequent pulses, near said position. In particular, a suitable control system allows to control the drive roll 21 when the net is tensioned owing to the action of the spring.

Evidently, there may be utilized also different systems for coordinating the feeding and supporting means in said step; e.g., the feeding means can supply the net in a manner continuous and coordinated with the angular shifting of the bars 32, so that during the advancing of the net toward the inlet the portion 11 of net always rests onto the plate 31.

However, in order to know the length of net uncoiled by the rolls 21 and 22, the feeding means 2 comprises a rotation sensor, allowing to indirectly calculate the length of the net uncoiled by the rolls.

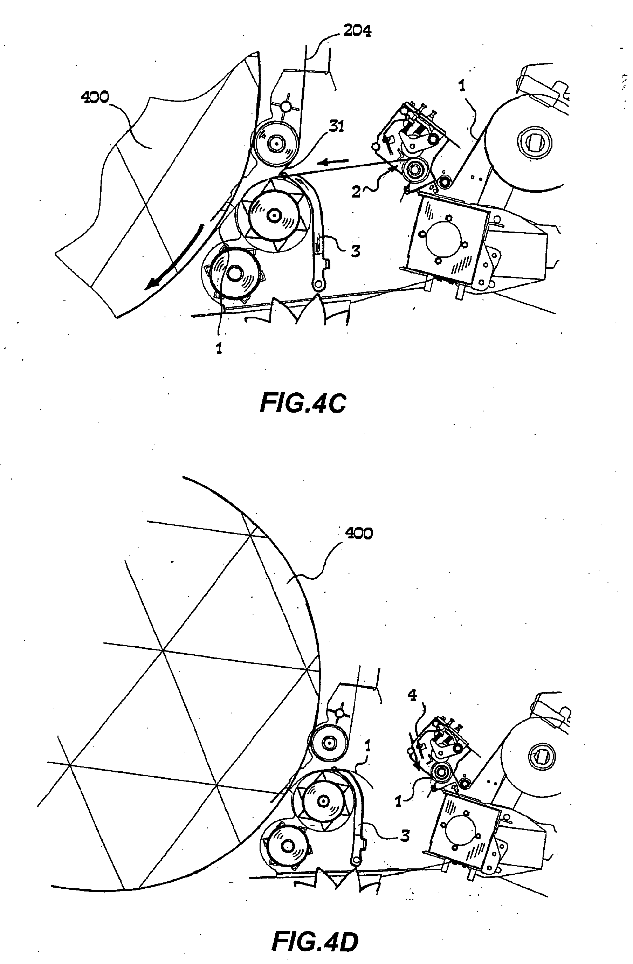

Referring to figure 4C, upon reaching the position near to the inlet the drive roll 21 continues to supply net, which thus can freely enter into the chamber 202, so as to be dragged in rotation by the bale, winding thereabout. Remarkably, the serration on the plate 31 is such that the net does not get caught anymore when the supporting means lies in a location near to the inlet. Therefore, in such a location the net may freely slide onto the plate, kept as support.

Also the step of inserting may take place by subsequent pulses. In other words, the drive roll 21 supplies the net at small discrete intervals.

When the net clings to the bale and starts to be dragged, the feeding means end its action and the roll 21 becomes idle.

The feature of operating at subsequent intervals proves useful, since the length of net required in order for it to be pulled by the bale is variable and not known a priori.

By operating in pulses, there is allowed the time interval required so that the net may be secured to the bale. This time interval corresponds to the pause between one pulse and the subsequent one; once elapsed, if the net is still not capable of being dragged by the bale the feeding means supplies additional net. These latter steps are repeated until the net reaches a length sufficing to be secured to the bale and be dragged into rotation by the latter.

Once the net is secured, the wrapping goes on by winding up the bale for some revolutions, optionally utilizing a preset length of net, such as to obtain a stable and compact product, according to the type of crop material.

Upon reaching such a condition, and referring to figure 4D, the net 1 is cut with suitable cutting means 4 that, in the present embodiment, basically consists of horizontally pivoted knives.

The knives act in particular at the outlet of the feeding means, so that a portion of net remains anyhow comprised between the rolls 21 and 22, to be fed at the subsequent wrapping.

The bale 400, once wound up by the net 1, is then ejected from the chamber 202, and the agricultural machine is ready to form a new bale.

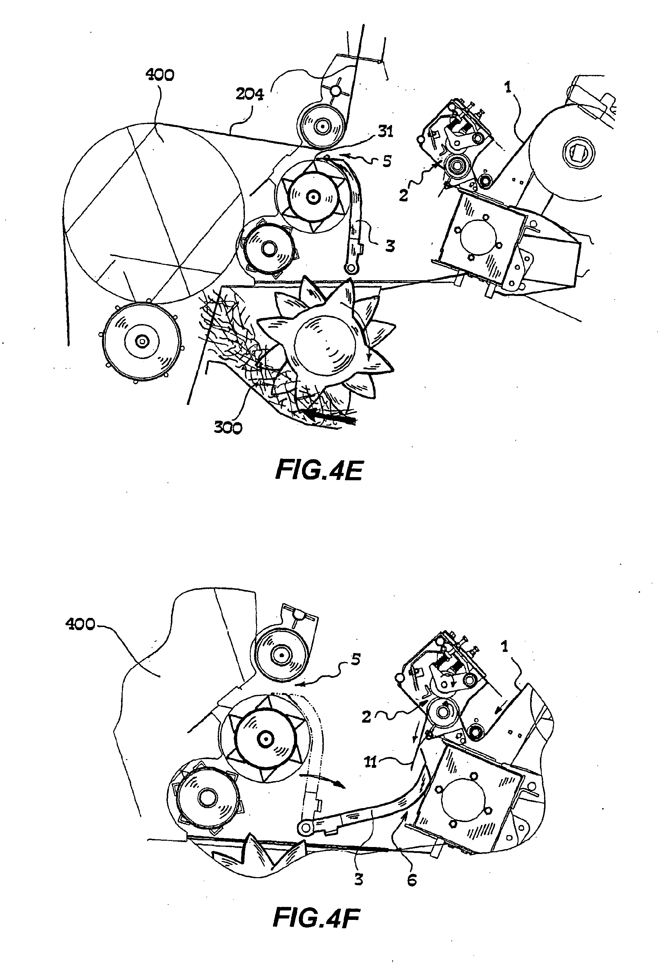

Moreover, referring to figure 4E, the device according to the present invention entails a further significant advantage during the same forming of the bale.

In fact, the supporting means 3, and in particular the plate 31, are conveniently kept near the inlet 5 during the forming of the bale.

Thus, the outletting of crop material from the chamber 202 is inhibited, or anyhow markedly limited. As already described, this feature prevents said material from hindering the motions of the components of the device, and above all of the net 1. Moreover, the round balers can also comprise a twine wrapper, not illustrated in the figure, that is usually located above or below the feeding means.

Hence, advantageously the supporting means may also be utilized as protective bulkhead for such twine wrappers. Said bulkhead may be opened during the operation of these devices, them also needing access to the forming chamber.

Hence, unlike the wrapping systems according to the known art, the device and the method according to the present invention allow to carry out this important function, without the use of additional bulkheads or other components.

Lastly, referring to figure 4F, upon ending the forming of the bale, and analogously to what is carried out for figure 4A, the supporting means is shifted from the position 5 near the inlet to the receiving position 6 and the wrapping cycle can restart in the manner described above.

During the steps described above, referring to figures 4A to 4F, the reel 10 may remain always braked by means of a suitable brake, not illustrated in the figure, as the motion of the net, during the step of reinserting and reactivating, is carried out by the feeding means 2.

This feature allows to avoid the use of special brake-disengaging mechanism, usually present in other known constructive solutions, to allow the uncoiling of the reel.

Remarkably, the supporting means may be removed from the inlet 5 even some instants prior to the complete forming of the bale, as the former, by being in a position quite near to the chamber, could interfere with the bale in the final instants of forming.

Lastly, the replacing of the reel 10 once the net has run out takes place in an extremely simple manner. The operator should merely replace the reel and insert a tail of net between the rolls 21 and 22, then the wrapping may start again with no need of any other intervention. The roll 21 rotates easily with a knob.

The inserting of the net is always braked, and therefore already in an optimal position.

Since the brake onto the reel is always inserted, the mechanism is simpler.

The present invention has hereto been described with reference to preferred embodiments thereof. It is understood that other embodiments referable to the same inventive kernel may exist, all falling within the protective scope of the appended claims.

## Claims

1. A device (100) for wrapping bales (400) in agricultural machines (200) by means of sheet material (1), comprising feeding means (2) and supporting means (3) of said sheet material (1), said supporting means (3) comprises a supporting plate (31), and being movable from a position near to an inlet (5) of a forming chamber (202) for said bale (400) to a receiving position (6), with respect to said inlet (5), wherein
said feeding means (2) supplies said sheet material (1) at a region intermediate between said receiving position (6) and said position near to said inlet (5), and
said supporting means (3) supportingly receives said sheet material (1), in a manner such as to bring it near to said inlet (5),
the device being **characterised in that**
said plate (31) alternatively carries out an action of tensioning said sheet material (1), during a motion thereof of approaching to said inlet (5), and of supporting of said material (1), when said supporting means (3) is in a position near to said inlet (5).

2. The device (100) for wrapping bales (400) according to the preceding claim, wherein said feeding means (2) comprises feeding rolls (21, 22).

3. The device (100) for wrapping bales (400) according to the preceding claim, wherein said feeding rolls comprise a drive roll (21) and a compression roll (22) apt to carry out an action of pressing on said drive roll (21).

4. The device (100) for wrapping bales (400) according to the preceding claim, wherein said drive roll (21) may alternatively provide traction to said sheet material (1) and rotate idle.

5. The device (100) for wrapping bales (400) according to one of the preceding claims, wherein said supporting means (3) further comprises a pair of bars (32) pivotally connected to a frame, and said supporting plate (31) being mounted between said bars (32).

6. The device (100) for wrapping bales (400) according to claim 5, wherein said plate (31) has a serration onto which said sheet material (1) can get caught, during the approaching to said inlet (5).

7. The device (100) for wrapping bales (400) according to one of the preceding claims, wherein said supporting means (3) is apt to be arranged in a position near said inlet (5) during the forming of the bale and during the wrapping of the same, so as to prevent the output of crop material (300) from said inlet (5).

8. The device (100) for wrapping bales (400) according to one of the preceding claims, comprising means for controlling the advancing of said sheet material, and for coordinating the action of said feeding means (2) and the motion of said supporting means (3) .

9. The device (100) for wrapping bales (400) according to one of the preceding claims, wherein said supporting means (3) is brought from said receiving position (6) to said position near to said inlet (5) by means of the releasing of a prewound elastic element.

10. A method for wrapping bales (400) of crop material by means of sheet material (1), comprising the steps of:
- moving supporting means (3) from a position in proximity to an inlet (5) of a forming chamber (202) to a receiving position (6) with respect to said inlet (5);
- supplying said sheet material (1) by means of feeding means (2) including rolls (21, 22) for uncoiling said sheet material (1) of a preset quantity and at a region intermediate between said position in proximity to said inlet (5) and said receiving position, in a manner such that a portion (11) of sheet material (1) may interfere with the motion of said supporting means (3);
- moving said supporting means from said receiving position (6) to said position near said inlet (5) so as to bring said portion (11) of sheet material (1) near to said inlet (5);
- inserting said sheet material (1) into said forming chamber (202), so that it be dragged in rotation by the action of said bale(400); and
- winding up said sheet material (1) around said bale (400),
the method being **characterised in that** it further comprises the step of
- providing traction to said sheet material (1) during the steps of supplying said portion (11) and during the approaching to said inlet (5) by means of a drive roll (21) of said feeding rolls (21, 22), and said roll (21) being instead idle during the winding up of said material (1) around said bale (400).

11. The method for wrapping bales according to one of the preceding claims, wherein said step of shifting said supporting means (3) to bring said portion (11) near to said inlet (5) occurs in cooperation with said feeding means (2), so that the latter supplies additional sheet material (1) during said approaching motion.

12. The method for wrapping bales according to the preceding claim, wherein said feeding means (2) supply said material (1) during said approaching motion, according to a plurality of pulses.

13. The method for wrapping bales according to one of the preceding claims, comprising further the step of performing the cutting of said material sheet (1) after the step of winding up the latter around said bale (5).

## Patentansprüche

1. Vorrichtung (100) zum Umhüllen von Ballen (400) in landwirtschaftlichen Maschinen (200) mit Hilfe von Flächenmaterial (1), mit einer Zuführeinrichtung (2) und einer Trageinrichtung (3) für das Flächenmaterial (1), wobei die Trageinrichtung (3) eine Tragplatte (31) umfasst und aus einer Position nahe bei einem Einlass (5) einer Bildungskammer (202) für den Ballen (400) in eine Empfangsposition (6) in Bezug auf den Einlass (5) bewegbar ist, wobei
die Zuführeinrichtung (2) das Flächenmaterial (1) in einem Gebiet zwischen der Empfangsposition (6) und der Position nahe bei dem Einlass (5) zuführt und
die Trageinrichtung (3) das Flächenmaterial (1) abstützend empfängt, um es in die Nähe des Einlasses (5) zu bringen,
wobei die Vorrichtung **dadurch gekennzeichnet ist, dass**
die Platte (31) abwechselnd eine Zugwirkung auf das Flächenmaterial (1) ausübt während einer Annäherungsbewegung desselben an den Einlass (5) und das Material (1) trägt, wenn die Trageinrichtung (3) in einer Position nahe bei dem Einlass (5) ist.

2. Vorrichtung (100) zum Umhüllen von Ballen (400) nach dem vorhergehenden Anspruch, wobei die Zuführeinrichtung (2) Zuführwalzen (21, 22) umfasst.

3. Vorrichtung (100) zum Umhüllen von Ballen (400) nach dem vorhergehenden Anspruch, wobei die Zuführwalzen eine Antriebswalze (21) und eine Druckwalze (22), die in der Lage ist, eine Druckwirkung auf die Antriebswalze (21) auszuüben, umfassen.

4. Vorrichtung (100) zum Umhüllen von Ballen (400) nach dem vorhergehenden Anspruch, wobei die Antriebswalze (21) abwechselnd eine Traktionswirkung auf das Flächenmaterial (1) ausüben und sich im Leerlauf drehen kann.

5. Vorrichtung (100) zum Umhüllen von Ballen (400) nach einem der vorhergehenden Ansprüche, wobei die Trageinrichtung (3) weiter ein Paar Stangen (32) aufweist, die mit einem Rahmen schwenkbar verbunden sind, und wobei die Tragplatte (31) zwischen den Stangen (32) befestigt ist.

6. Vorrichtung (100) zum Umhüllen von Ballen (400) nach Anspruch 5, wobei die Platte (31) eine Zahnung hat, von der das Flächenmaterial (1) während der Annäherung an den Einlass (5) erfasst werden kann.

7. Vorrichtung (100) zum Umhüllen von Ballen (400) nach einem der vorhergehenden Ansprüche, wobei die Trageinrichtung (3) in der Lage ist, in einer Position nahe bei dem Einlass (5) während des Bildens des Ballens und während des Umhüllens desselben angeordnet zu sein, um so die Abgabe von Erntematerial (300) aus dem Einlass (5) zu verhindern.

8. Vorrichtung (100) zum Umhüllen von Ballen (400) nach einem der vorhergehenden Ansprüche, mit einer Einrichtung zum Steuern des Vorschubs des Flächenmaterials und zum Koordinieren der Wirkung der Zuführeinrichtung (2) und der Bewegung der Trageinrichtung (3).

9. Vorrichtung (100) zum Umhüllen von Ballen (400) nach einem der vorhergehenden Ansprüche, wobei die Trageinrichtung (3) aus der Empfangsposition (6) in die Position nahe bei dem Einlass (5) gebracht wird durch Freigeben eines vorgewickelten elastischen Elements.

10. Verfahren zum Umhüllen von Ballen (400) von Erntematerial mit Hilfe von Flächenmaterial (1), beinhaltend die Schritte:
- Bewegen einer Trageinrichtung (3) aus einer Position in der Nähe eines Einlasses (5) einer Bildungskammer (202) in eine Empfangsposition (6) in Bezug auf den Einlass (5);
- Liefern des Flächenmaterials (1) mit Hilfe einer Zuführeinrichtung (2), die Walzen (21, 22) aufweist zum Abwickeln des Flächenmaterials (1) in einer voreingestellten Menge und in einem Gebiet zwischen der Position in der Nähe des Einlasses (5) und der Empfangsposition derart, dass ein Teil (11) des Flächenmaterials (1) in die Bewegung der Trageinrichtung (3) geraten kann;
- Bewegen der Trageinrichtung aus der Empfangsposition (6) in die Position nahe bei dem Einlass (5), um so den Teil (11) des Flächenmaterials (1) in die Nähe des Einlasses (5) zu bringen;
- Einführen des Flächenmaterials (1) in die Bildungskammer (202), so dass es durch die Wirkung des Ballens (400) bei der Drehung mitgenommen wird; und
- Wickeln des Flächenmaterials (1) um den Ballen (400),
wobei das Verfahren **dadurch gekennzeichnet ist, dass** es folgenden weiteren Schritt umfasst
- Ausüben einer Traktionswirkung auf das Flächenmaterial (1) während der Schritte des Zuführens des Teils (11) und während der Annäherung an den Einlass (5) mit Hilfe einer Antriebswalze (21) der Zuführwalzen (21, 22) und wobei die Walze (21) während des Wickelns des Materials (1) um den Ballen (400) stattdessen im Leerlauf ist.

11. Verfahren zum Umhüllen von Ballen nach einem der vorhergehenden Ansprüche, wobei der Schritt des Verschiebens der Trageinrichtung (3), um den Teil (11) in die Nähe des Einlasses (5) zu bringen, in Zusammenwirkung mit der Zuführeinrichtung (2) ausgeführt wird, so dass letztere zusätzliches Flächenmaterial (1) während der Annäherungsbewegung liefert.

12. Verfahren zum Umhüllen von Ballen nach dem vorhergehenden Anspruch, wobei die Zuführeinrichtung (2) das Material (1) während der Annäherungsbewegung gemäß einer Vielzahl von Impulsen liefert.

13. Verfahren zum Umhüllen von Ballen nach einem der vorhergehenden Ansprüche, beinhaltend weiter den Schritt Durchschneiden des Flächenmaterials (1) nach dem Schritt des Wickelns von letzterem um den Ballen (5).

## Revendications

1. Dispositif (100) pour envelopper des balles (400) dans des machines agricoles (200) à l'aide d'un matériau en feuille (1), comprenant un moyen d'alimentation (2) et un moyen de support (3) dudit matériau en feuille (1), ledit moyen de support (3) comprend une plaque de support (31) et peut être déplacé entre une position à proximité d'une entrée (5) d'une chambre de formation (202) pour ladite balle (400) et une position de réception (6) par rapport à ladite entrée (5), dans lequel
ledit moyen d'alimentation (2) amène ledit matériau en feuille (1) dans une zone entre ladite position de réception (6) et ladite position à proximité de ladite entrée (5),
ledit moyen de support (3) reçoit ledit matériau en feuille en le supportant de manière à l'amener à proximité de ladite entrée (5),
le dispositif est **caractérisé en ce que**
ladite plaque (31) effectue alternativement une action de tension dudit matériau en feuille (1) pendant son mouvement d'approche de ladite entrée (5) et du support dudit matériau (1), lorsque ledit moyen de support (3) est dans une position à proximité de ladite entrée (5).

2. Dispositif (100) pour envelopper des balles (400) selon la revendication précédente, dans lequel ledit moyen d'alimentation (2) comprend des rouleaux d'alimentation (21, 22).

3. Dispositif (100) pour envelopper des balles (400) selon la revendication précédente, dans lequel lesdits rouleaux d'alimentation comprennent un rouleau d'entraînement (21) et un rouleau de compression (22) capable d'effectuer une action de compression sur ledit rouleau d'entraînement (21).

4. Dispositif (100) pour envelopper des balles (400) selon la revendication précédente, dans lequel ledit rouleau d'entraînement (21) peut alternativement exercer une traction sur ledit matériau en feuille (1) et tourner à vide.

5. Dispositif (100) pour envelopper des balles (400) selon l'une quelconque des revendications précédentes, dans lequel ledit moyen de support (3) comprend, en outre, une paire de barres (32) raccordées de manière pivotante à un châssis et ladite plaque de support (31) étant montée entre lesdites barres (32).

6. Dispositif (100) pour envelopper des balles (400) selon la revendication 5, dans lequel ladite plaque (31) est munie d'une dentelure sur laquelle ledit matériau en feuille (1) peut être saisi pendant son approche de ladite entrée (5).

7. Dispositif (100) pour envelopper des balles (400) selon l'une quelconque des revendications précédentes, dans lequel ledit moyen de support (3) peut être placé dans une position à proximité de ladite entrée (5) pendant la formation de la balle et pendant l'enveloppage de celle-ci de manière à empêcher la sortie du produit agricole (300) par ladite entrée (5).

8. Dispositif (100) pour envelopper des balles (400) selon l'une quelconque des revendications précédentes, comprenant un moyen pour contrôler l'avancée dudit matériau en feuille et pour coordonner l'action dudit moyen d'alimentation (2) et le mouvement dudit moyen de support (3).

9. Dispositif (100) pour envelopper des balles (400) selon l'une quelconque des revendications précédentes, dans lequel ledit moyen de support (3) est amené de ladite position de réception (6) vers ladite position à proximité de ladite entrée (5) par le desserrage d'un élément élastique pré-enroulé.

10. Procédé pour envelopper des balles (400) de produit agricole à l'aide d'un matériau en feuille (1), comprenant les étapes consistant à :
- déplacer le moyen de support (3) entre une position à proximité d'une entrée (5) d'une chambre de formation (202) et une position de réception (6) par rapport à ladite entrée (5), dans lequel
- amener ledit matériau en feuille (1) à l'aide du moyen d'alimentation (2) comportant des rouleaux (21, 22) pour dérouler ledit matériau en feuille (1) suivant une quantité prédéfinie et dans une zone entre ladite position à proximité de ladite entrée (5) et ladite position de réception, de telle sorte qu'une partie (11) du matériau en feuille (1) peut interférer avec le mouvement dudit moyen de support (3) ;
- déplacer ledit moyen de support entre ladite position de réception (6) et ladite position à proximité de ladite entrée (5) de manière à amener ladite partie (11) du matériau en feuille (1) à proximité de ladite entrée (5) ;
- insérer ledit matériau en feuille (1) dans ladite chambre de formation (202) afin qu'il soit entraîné en rotation par l'action de ladite balle (400) ; et
- enrouler ledit matériau en feuille (1) autour de ladite balle (400),
le procédé étant **caractérisé en ce qu'**il comprend également les étapes consistant à :
- exercer une traction sur ledit matériau en feuille (1) pendant les étapes d'amenée de ladite partie (11) et pendant l'approche de ladite entrée (5) à l'aide d'un rouleau d'entraînement (21) desdits rouleaux d'alimentation (21, 22) et ledit rouleau (21) tournant à vide pendant l'enroulement dudit matériau (1) autour de ladite balle (400).

11. Procédé pour envelopper des balles selon l'une quelconque des revendications précédentes, dans lequel ladite étape consistant à déplacer ledit moyen de support (3) pour amener ladite partie (11) à proximité de ladite entrée (5) est réalisée en cinération avec ledit moyen d'alimentation (2) de sorte que ce dernier amène du matériau en feuille supplémentaire (1) pendant ledit mouvement d'approche.

12. Procédé pour envelopper des balles selon la revendication précédente, dans lequel ledit moyen d'alimentation (2) amène ledit matériau (1) pendant ledit mouvement d'approche en fonction d'une pluralité d'impulsions.

13. Procédé pour envelopper des balles selon l'une quelconque des revendications précédentes, comprenant en outre l'étape consistant à réaliser la coupe dudit matériau en feuille (1) après l'étape d'enroulement de ce dernier autour de ladite balle (5).
